# EUROPÄISCHE PATENTSCHRIFT

(11) **EP 2 907 579 B1**
(45) Veröffentlichungstag und Bekanntmachung des Hinweises auf die Patenterteilung: **05.06.2019**
(21) Anmeldenummer: 14004108.8
(22) Anmeldetag: 05.12.2014
(51) Int. Cl.: B04B 7/18

(54) **Zentrifugenkorb für eine Siebzentrifuge**
Centrifuge basket for a screen centrifuge
Panier pour essoreuse à panier-tamis

(30) Priorität: 17.02.2014 DE 102014001999
(43) Veröffentlichungstag der Anmeldung: 19.08.2015
(73) Patentinhaber: Siebtechnik GmbH, 45478 Mülheim an der Ruhr (DE)
(72) Erfinder: Dietschreit, Horst, 45479 Mülheim an der Ruhr (DE)
(74) Vertreter: Patentanwaltskanzlei Methling

(56) Entgegenhaltungen:
- WO-A1-2008/116245
- DE-A1- 4 244 421
- DE-A1-102004 057 859
- DE-U1- 8 309 438
- FR-A- 435 457

## Beschreibung

Die Erfindung betrifft einen Zentrifugenkorb für eine Siebzentrifuge, insbesondere eine Siebschnecken-, Schub- oder Schwingsiebzentrifuge, mit einem äußeren konischen Tragkorb und im Tragkorb einliegenden Siebsegmenten, wobei der Tragkorb an seinem hinteren Rand eine ringförmige Nut aufweist, in die die Siebsegmente formschlüssig eingelegt sind.

Ein derartiger Zentrifugenkorb ist aus der DE 10 2004 057 859 bekannt. Bei dem bekannten Zentrifugenkorb werden die Siebsegmente an ihrem vorderen Rand durch einen Klemmring unter Kraftschluss am Tragkorb fixiert.

Nachteilig ist dabei, dass der Klemmring ein zusätzliches aufwändig herzustellendes Bauteil bildet, welches nach seiner Montage eine Kante am vorderen Rand des Zentrifugenkorbs, über welchen das zu siebende Material abgeführt wird, darstellt. Hierdurch unterliegt der Klemmring einem hohen Verschleiß und es bilden sich unerwünschte Ablagerungen an der Kante.

Aus der WO 2008/116245 A1 ist ein Zentrifugenkorb für eine Siebzentrifuge mit einem äußeren konischen Tragkorb und im Tragkorb einliegenden Siebsegmenten bekannt, wobei die Siebsegmente an ihrem vorderen Ende eine Lasche aufweisen, die von einer Schraube durchgriffen ist und mittels derer die Siebsegmente lösbar am vorderen Rand des Tragkorbs fixiert sind.

Die Aufgabe der Erfindung ist es daher, einen Zentrifugenkorb für eine Siebzentrifuge der eingangs genannten Art derart weiterzubilden, dass dieser eine einfachere Konstruktion und eine verbesserte Zeitstandfestigkeit aufweist.

Diese Aufgabe wird erfindungsgemäß durch einen Zentrifugenkorb gemäß Anspruch 1 gelöst. Vorteilhafte Weiterbildungen der Erfindung sind in den abhängigen Ansprüchen angegeben.

Besonders vorteilhaft bei dem Zentrifugenkorb für eine Siebzentrifuge, insbesondere eine Siebschnecken-, Schub- oder Schwingsiebzentrifuge, mit einem äußeren konischen Tragkorb und im Tragkorb einliegenden Siebsegmenten, wobei der Tragkorb an seinem hinteren Rand eine ringförmige Nut aufweist, in die die Siebsegmente formschlüssig eingelegt sind, ist es, dass die Siebsegmente an ihrer dem Tragkorb zugewandten Seite mindestens eine Lasche aufweisen, die von zumindest einer Schraube durchgriffen ist und mittels derer die Siebsegmente lösbar am vorderen Rand des Tragkorbs fixiert sind.

Dabei ragen die Siebsegmente an ihrem vorderen Rand über den Tragkorb hinaus. Das bedeutet, dass das in der Zentrifuge aufbereitete Gut, welches am vorderen Rand aus dem Zentrifugenkorb ausgetragen wird, über die Siebsegmente abgeführt wird, ohne dass das aufbereitete Gut mit dem Zentrifugenkorb selbst in Berührung kommt. Die Befestigungsmittel und Verschraubungen sowie der Tragkorb selbst liegen somit stets im Abwurfschatten der Siebsegmente, da diese am vorderen Rand über den Tragkorb hinausragen und den Tragkorb sowie die Befestigungselemente wie Schrauben und Laschen schützen. Der Tragkorb selbst sowie die Befestigungsschrauben unterliegen somit keinerlei Abrasion und somit keinen erhöhten Verschleiß.

Mit dem hinteren Rand ist dabei der kleinere Durchmesser des konischen Tragkorbs gemeint. Üblicherweise wird das zu siebende Gut am kleineren Durchmesser in den Zentrifugenkorb eingebracht und sodann in dem Zentrifugenkorb aufbereitet. Mit dem vorderen Rand ist dementsprechend der größere Durchmesser des konischen Tragkorbs gemeint. Über den größeren Durchmesser wird das aufbereitete Gut aus dem Zentrifugenkorb ausgebracht.

Kern der Erfindung ist es somit, dass jedes Siebsegment an seiner dem Tragkorb zugewandten Seite mindestens eine Lasche aufweist. Die Lasche wird von zumindest einer Befestigungsschraube durchgriffen, mittels derer das Siebsegment an dem Tragkorb oder an einem an dem Tragkorb angeordneten Flansch angeschraubt wird. Durch Verwendung von Schrauben als Befestigungsmittel sind die Siebsegmente lösbar am Tragkorb fixiert, sodass die Siebsegmente bei Erreichen der Verschleißgrenze auf leichte Art und Weise gelöst und ausgetauscht werden können.

Zur Montage muss lediglich jedes einzelne Siebsegment in die am hinteren, kleineren Durchmesser des Tragkorbs angeordnete Nut formschlüssig eingeschoben werden. Anschließend wird das Siebsegment am vorderen Rand am Tragkorb mittels einer an dem Siebsegment angeordneten Lasche angeschraubt und somit am Tragkorb fixiert. Ausbau und Austausch erfolgt dementsprechend umgekehrt, indem zunächst die Verschraubung eines Siebsegmentes am vorderen Rand des Tragkorbs gelöst und sodann das Siebsegment aus der Nut am hinteren Rand des Tragkorbs herausgezogen wird. Das Bestücken des Tragkorbs mit Siebsegmenten erfolgt nach und nach, indem der Tragkorb jeweils um den Winkel, welcher von einem Siebsegment abgedeckt weiter gedreht wird, und sodann das nächste Siebsegment montiert wird.

Am hinteren Rand des Tragkorbs, d.h. an dem kleineren Durchmesser des Zentrifugenkorbs, ist eine Nut angeordnet, in welcher die Siebsegmente formschlüssig einliegen. Somit weist der Tragkorb an seinem hinteren Rand durch diese Nut eine umlaufende oder segmentierte Anlageschulter auf, die die Siebsegmente hintergreift und/oder übergreift.

Die Nut kann durch spanende Formgebung in den Tragkorb eingebracht sein. Die Nut kann alternativ dadurch geschaffen sein, dass am hinteren Rand des Tragkorbs ein Ring oder mehrere Ringsegmente befestigt, insbesondere angeschweißt und/oder angeschraubt sind, sodass zwischen Ring bzw. Ringsegmenten und dem Tragkorb eine umlaufende Nut und eine Anlageschulter gebildet ist.

Hierdurch wird eine preiswert zu fertigende Montagehilfe in Form einer Einfädelnut und gleichzeitig eine endseitige Fixierung der Siebsegmente durch einen Formschluss geschaffen, wobei die Montage erleichtert wird und zur Fixierung der Siebsegmente lediglich die Verschraubung der Siebsegmente am leicht zugänglichen vorderen Rand des Tragkorbs erfolgen muss.

Vorzugsweise weisen die Siebsegmente an den Seiten, mit denen zwei benachbarte Siebsegmente angrenzen, keine Verbindungen oder Befestigungen mit dem benachbarten Siebsegment auf, das heißt, dass die Siebsegmente untereinander frei von Verbindungen sind. Hierdurch ist es möglich, auch einzelne Siebsegmente auszutauschen.

Die Laschen der Siebsegmente weisen Bohrungen und/oder Langlöcher auf, die von Befestigungsschrauben durchgriffen werden und mittels derer die Siebsegmente lösbar an dem Tragkorb fixiert werden. Vorteilhaft ist insbesondere die Anordnung von Langlöchern, da hierdurch die Fertigung des Siebsegmentes weniger aufwändig ist und eine Ausrichtung des Siebsegmentes gegenüber dem Tragkorb vereinfacht wird. Nach Ausrichtung des Siebsegmentes werden die Befestigungsschrauben, mittels derer die Siebsegmente an dem Tragkorb angeschraubt werden, durch die Bohrungen und/oder Langlöcher in entsprechende Gewindebohrungen oder Gewindesacklöcher in dem Tragkorb eingebracht und festgeschraubt.

Jedes Siebsegment kann mehrere Laschen an der dem Tragkorb zugewandten Seite aufweisen, so dass jedes Siebsegment an mehreren Stellen über dem Umfangsabschnitt des Segmentes mittels Befestigungsschrauben an dem Tragkorb fixiert wird.

Alternativ kann jedes Siebsegment eine über den gesamten Umfangsabschnitt des Segmentes laufende Lasche mit mehreren insbesondere äquidistant angeordneten Bohrungen und/oder Langlöchern aufweisen, wobei jedes Siebsegment an mehreren Stellen über dem Umfangsabschnitt mittels Befestigungsschrauben an dem Tragkorb fixiert wird.

Vorzugsweise sind die Laschen durch Flacheisen gebildet. Insbesondere können die Laschen an den Siebsegmenten angeschweißt sein. Durch die Verwendung einer Schweißkonstruktion ist eine besonders vorteilhafte und kostengünstige Fertigung der Siebsegmente möglich.

Vorzugsweise ist der Siebeinsatz des Zentrifugenkorbes aus vier bis zwölf, vorzugsweise aus sechs Segmenten gebildet. Hierdurch ergibt sich eine vorteilhafte Teilung des Tragkorbes, wodurch die Montage der Siebsegmente erleichtert wird. Das bedeutet, dass vier bis zwölf, vorzugsweise sechs Siebsegmente in den Tragkorb eingelegt und an dem Tragkorb lösbar fixiert sind.

Für spezielle Anwendungsgebiete ist es von Vorteil, wenn es sich bei den Siebsegmenten um Spaltsiebsegmente oder gefräste Siebsegmente oder lasergeschnittene Siebsegmente handelt.

Vorzugsweise ist der Tragkorb selbsttragend. Besonders bevorzugt ist der Tragkorb einstückig durch Walzen oder Gießen hergestellt. Alternativ kann es sich um eine Schweißkonstruktion handeln. Auf seiner Umfangsfläche, die einem Kegelmantelabschnitt entspricht, kann der Tragkorb Ausnehmungen aufweisen. Durch diese Ausnehmungen kann insbesondere Flüssigkeit abgeführt werden, da derartige Siebzentrifugen insbesondere zur Aufbereitung eines feuchten Gutes verwendet werden, d.h. zur Fest-Flüssig-Trennung.

Ausführungsbeispiele der Erfindung sind in den Zeichnungen dargestellt und werden nachfolgend näher erläutert. Es zeigen:
- Fig. 1: Einen Zentrifugenkorb für eine Siebzentrifuge in einer ersten Ausführungsform mit einem äußeren konischen Tragkorb und im Tragkorb einliegenden Siebsegmenten in perspektivischer Ansicht;
- Fig. 2: die perspektivische Ansicht eines einzelnen Siebsegmentes der Ausführungsform nach Fig. 1;
- Fig. 3: die Unterseite des Siebsegmentes nach Fig. 2;
- Fig. 4: einen senkrechten Schnitt durch den Zentrifugenkorb mit einem äußeren konischen Tragkorb und im Tragkorb einliegenden Siebsegmenten gemäß Fig. 1;
- Fig. 5: das Detail A nach Fig. 4;
- Fig. 6: das Detail B nach Fig. 4;
- Fig. 7: einen Zentrifugenkorb für eine Siebzentrifuge in einer zweiten Ausführungsform mit einem äußeren konischen Tragkorb und im Tragkorb einliegenden Siebsegmenten in perspektivischer Ansicht;
- Fig. 8: die perspektivische Ansicht eines einzelnen Siebsegmentes der zweiten Ausführungsform nach Fig. 7;
- Fig. 9: die Unterseite des Siebsegmentes nach Fig. 8;
- Fig. 10: die perspektivische Ansicht eines einzelnen Siebsegmentes einer dritten Ausführungsform;
- Fig. 11: eine Detaildarstellung einer alternativen Ausgestaltung der Einfädelnut am hinteren Ende des Tragkorbs mit einliegenden Siebsegmenten.

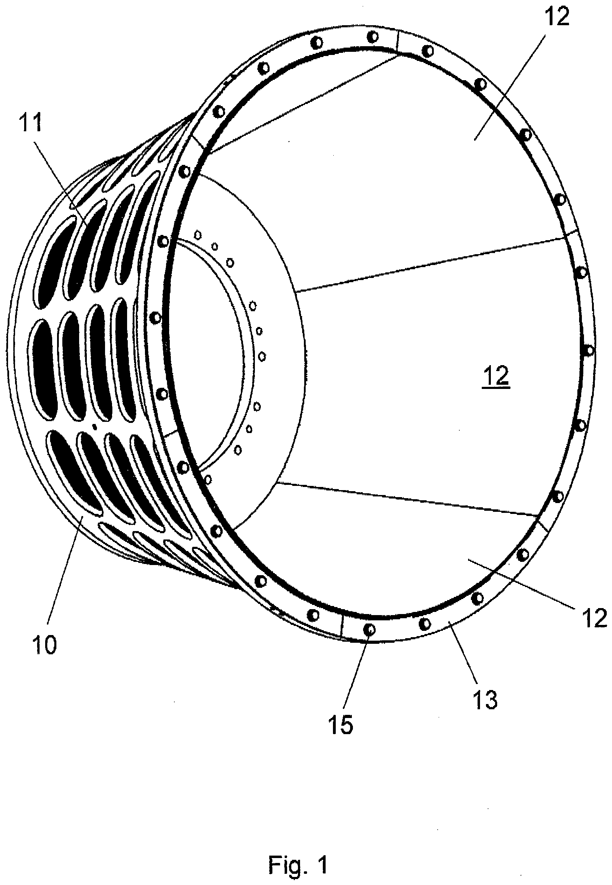

Fig. 1 zeigt eine erste Ausführungsform eines Zentrifugenkorbs für eine Siebzentrifuge mit einem äußeren konischen Tragkorb 10 und den in dem Tragkorb 10 einliegenden Siebsegmenten 12. Das aufzubereitende Gut wird in den konischen Tragkorb 10 am hinteren Ende am kleineren Durchmesser eingebracht und sodann in dem Zentrifugenkorb aufbereitet. Das aufbereitete Gut wird über das vordere Ende des Tragkorbs 10 mit dem größeren Durchmesser ausgetragen. Der Tragkorb 10 weist an seiner Außenseite eine Vielzahl von Ausnehmungen 11 auf, durch welche die zu trennende Flüssigkeit bei zu trocknendem Gut abgeführt wird. Die Siebsegmente 12 weisen an den Seitenkanten, mit denen zwei benachbarte Siebsegmente 12 aneinander angrenzen keine Verbindungen oder Befestigungen untereinander auf.

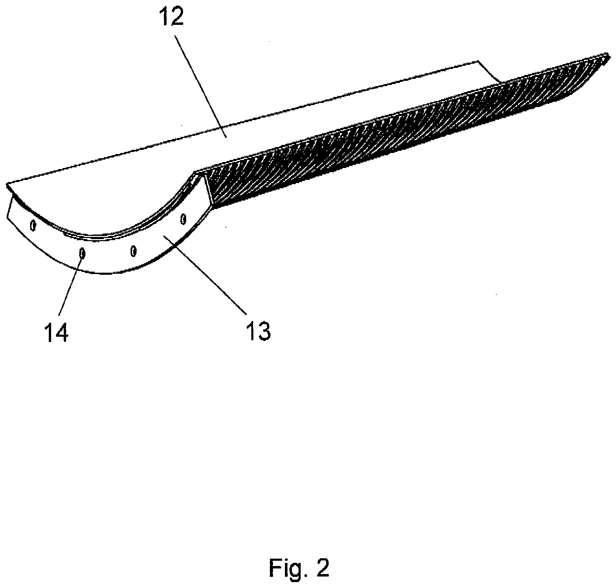

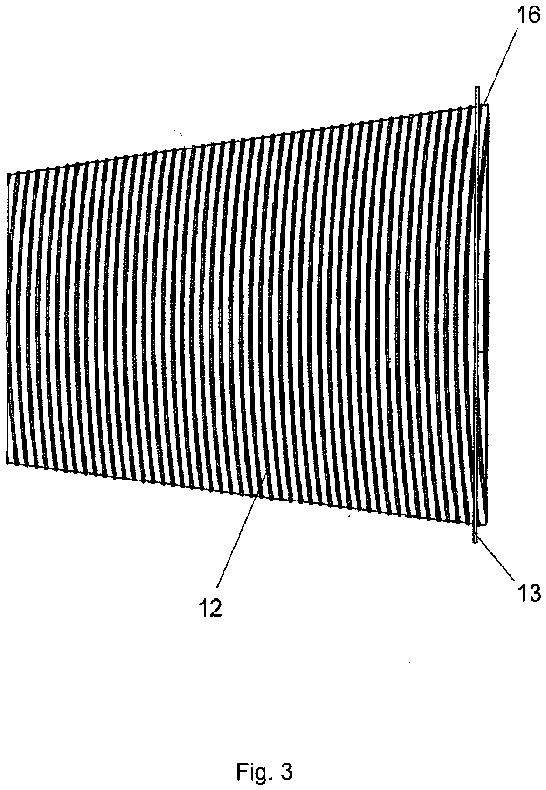

An der dem Tragkorb 10 zugewandten Seite der Siebsegmente 12 sind Laschen 13 angeschweißt, die über den gesamten Umfangsabschnitt der von dem Siebsegment 12 an dem Tragkorb 10 überdeckt wird, verlaufen. In dem in Fig. 1 dargestellten Ausführungsbeispiel sind in den Tragkorb 10 insgesamt sechs identische Siebsegmente 12 eingelegt und an dem Tragkorb 10 befestigt. Das bedeutet, dass jedes Siebsegment 12 einen Umfangsabschnitt von 60 Grad des Tragkorbs 10 überdeckt Über den entsprechenden Umfangsabschnitt von 60 Grad verlaufen in dem Ausführungsbeispiel gemäß Fig. 1 ebenfalls die Laschen 13, die an der dem Tragkorb 10 zugewandten Seite der Siebsegmente 12 angeschweißt sind. Erkennbar ist dies ferner in den Figuren 2 und 3. Die Fig. 2 zeigt eine perspektivische Ansicht eines Siebsegmentes 12 gemäß der Ausführungsform nach Fig. 1. Fig. 3 zeigt eine Unteransicht eines Siebsegmentes 12 gemäß der Ausführungsform nach Fig. 1. Erkennbar ist, dass an der im Einbauzustand dem Tragkorb 10 zugewandte Seite des Siebsegmentes 12 eine Lasche 13 angeschweißt ist, die mehrere Bohrungen 14 aufweist. Im montierten Zustand, wie er in Fig. 1 dargestellt ist, werden die Bohrungen 14 durch Befestigungsschrauben 15 durchgriffen, mittels derer die Siebsegmente 12 am vorderen Ende des Tragkorbs 10 an dem Tragkorb fixiert werden.

Durch die über den gesamten Umfangsabschnitt von einer Seitenkante des Siebsegmentes 12 zur anderen Seitenkante des Siebsegmentes verlaufenden Lasche 13 wird das Siebsegment zusätzlich versteift, sodass sich eine erhöhte Stabilität der Siebsegmente ergibt. Hierdurch wird die Formstabilität der Siebsegmente erhöht und die Durchmesseridentität mit dem Tragkorb gewährleistet.

Wie in den Figuren 2 und 3 erkennbar ist, weisen die Siebsegmente 12 einen vorderen Überstand 16 auf, welcher im montierten Zustand über den Tragkorb 10 nach vorne übersteht und den Tragkorb 10 überragt. Da das aufbereitete Gut aus dem Zentrifugenkorb zum vorderen größeren Durchmesser hin aus dem Zentrifugenkorb ausgetragen wird, sind durch diesen Überstand 16 sowohl der Tragkorb 10, als auch die Befestigungsschrauben 15 sowie die Befestigungslaschen 13 gegen Abrasion geschützt, da diese stets im Abwurfschatten des vorderen Überstandes 16 des Siebsegmentes 12 liegen.

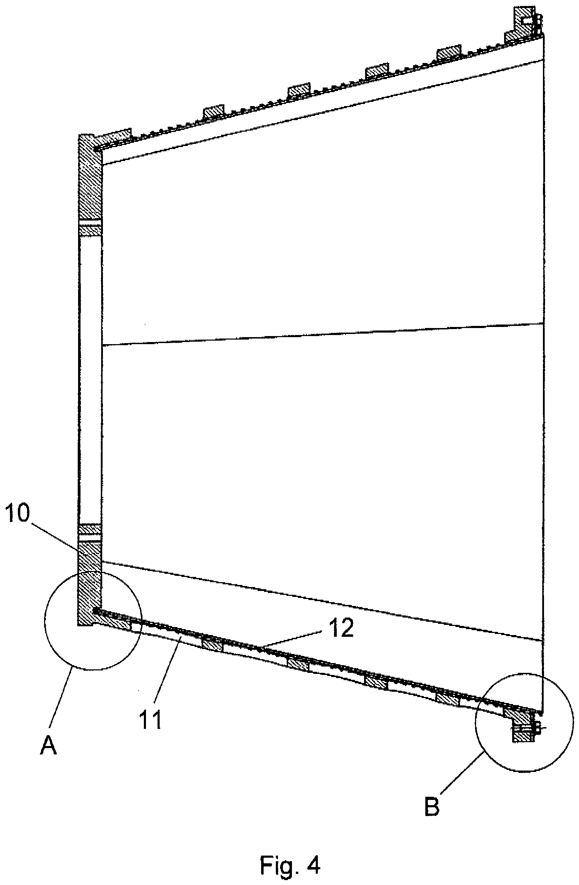

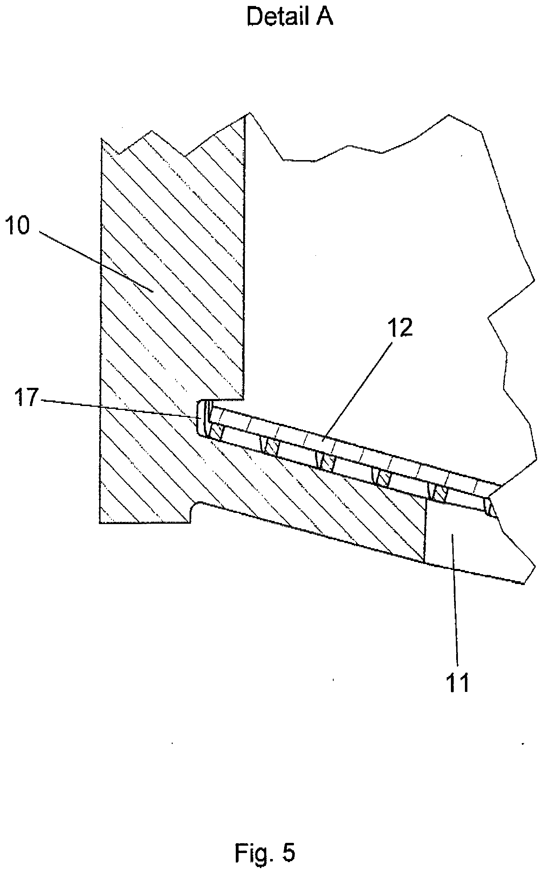

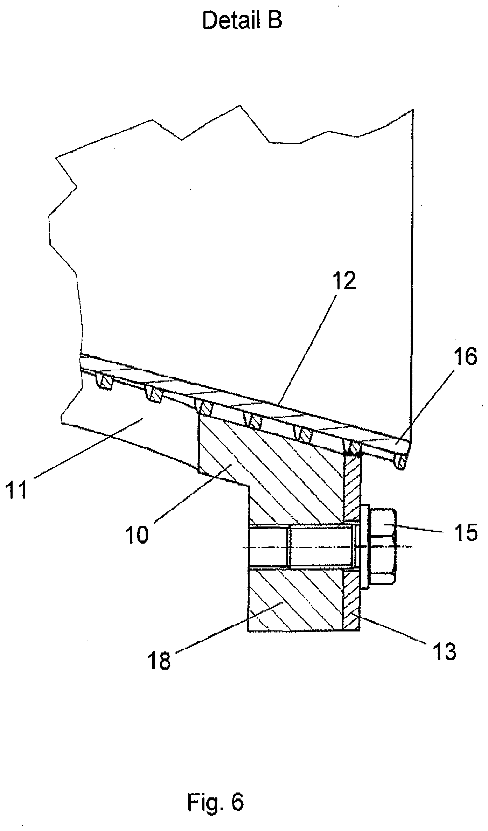

Fig. 4 zeigt einen senkrechten Schnitt durch den Zentrifugenkorb gemäß Fig. 1 mit dem äußeren konischen Tragkorb 10 und dessen Ausnehmungen 11. In dem Tragkorb 10 liegen ein die Siebsegmente 12, deren Montage und Befestigung an dem Tragkorb 10 anhand der Figuren 5 und 6 erläutert wird. Fig. 5 zeigt in vergrößerter Darstellung das Detail A nach Fig. 4. Fig. 6 zeigt in vergrößerter Darstellung das Detail B nach Fig. 4.

Am kleineren Durchmesser des Tragkorbs 10 werden die Siebsegmente 12 formschlüssig in eine umlaufende Nut 17 in den Tragkorb 10 eingeschoben, wie dies in Fig. 5 erkennbar ist. Die Nut 17 läuft über den gesamten Umfang des Tragkorbs 10 an dessen hinteren Ende mit dem kleineren Durchmesser um. Die Siebsegmente 12 werden in die Nut 17 formschlüssig eingelegt und hierdurch am hinteren Ende des Tragkorbs 10 fixiert. Die Nut 17 ist bei diesem Ausführungsbeispiel durch spanende Formgebung in den Tragkorb 10 eingebracht.

Am vorderen Ende werden die Siebsegmente mittels Befestigungsschrauben 15 am Tragkorb 10 fixiert, wie dies in der vergrößerten Darstellung des Details B in Fig. 6 erkennbar ist An der dem Tragkorb 10 zugewandten Seite ist an den Siebsegmenten 12 die Befestigungslasche 13 angeschweißt. Die Befestigungslasche 13 liegt flach auf dem einstückig am Tragkorb 10 angeformten Flansch 18 auf. Die Befestigungslasche 13 wird von Befestigungsschrauben 15 durchgriffen, die in Gewindebohrungen in dem am Tragkorb 10 angebrachten Flansch 18 eingeschraubt sind.

Ebenfalls in Fig. 6 erkennbar ist der vordere Überstand 16 der Siebsegmente 12, welcher über das vordere Ende des Tragkorbes 10 hinausragt und somit den Tragkorb 10 sowie die Befestigungslasche 13 und die Befestigungsschraube 15 vor Verschleiß schützt, da das nach dem Fest-Fiüssig-Trennvorgang in dem Zentrifugenkorb befindliche aufbereitete Gut nach vorne hin über den größeren Durchmesser des Zentrifugenkorbs ausgetragen wird, jedoch aufgrund des Vorsprungs 16 weder den Tragkorb 10, dessen Flansch 18 noch die Befestigungslasche 13 oder die Schraube 15 beaufschlagen kann. Hierdurch werden der Tragkorb 10 mit dem Flansch 18 sowie die Befestigungsschrauben 15 und die Befestigungslaschen 13 gegen Abrasion geschützt.

Zur Montage der Siebsegmenten 12 in dem Tragkorb 10 ist es lediglich erforderlich, die Siebsegmente 12 in die Nut 16 am kleineren Durchmesser des Tragkorbs 10 einzufädeln. So dann können am vorderen Ende des Tragkorbs 10 die Befestigungsschrauben 15 montiert werden und hierdurch die Siebsegmente 12 über die Befestigungslaschen 13 am Tragkorb 10 mittels der Befestigungsschrauben 15 angeschraubt werden.

Bei Erreichen der Verschleißgrenze der Siebsegmente 12 kann auf ebenso einfache Weise ein Austausch der Siebsegmente 12 erfolgen. Dadurch, dass die Siebsegmente 12 in dem Tragkorb 10 untereinander nicht verbunden sind, können einzelne Siebsegmente 12 nacheinander gelöst und ausgetauscht werden, indem die Befestigungsschrauben 15 gelöst werden und die Siebsegmente 12 einzeln aus dem Tragkorb 10 herausgenommen und durch neue Siebsegmente 12 ersetzt werden.

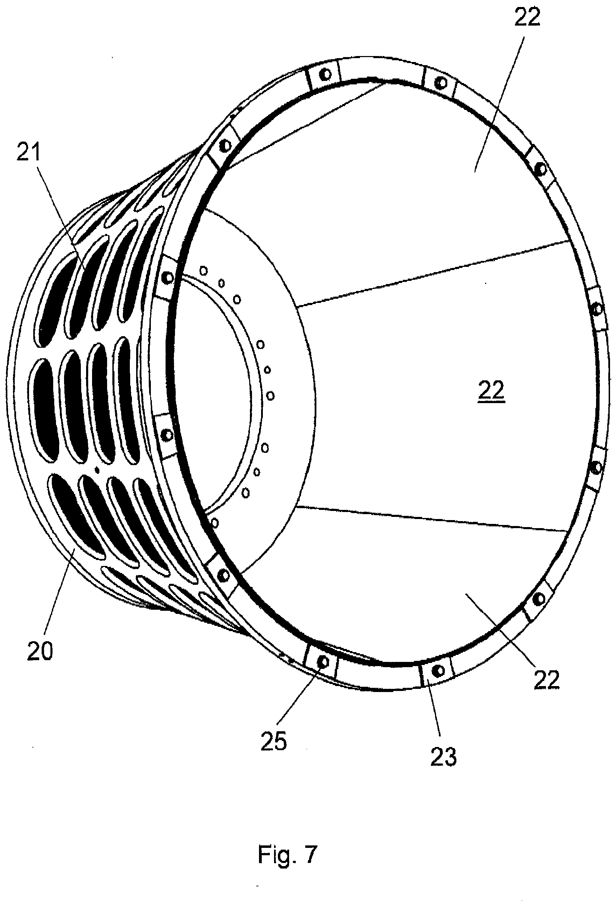

Fig. 7 zeigt eine zweite Ausführungsform eines Zentrifugenkorbs 20 mit darin einliegenden Siebsegmenten 22 in perspektivischer Ansicht. In dem Zentrifugenkorb 20 liegen wiederum sechs baugleiche Siebsegmente 22 ein, die jeweils ein Umfangssegment von 60 Grad des Tragkorbs 20 überdecken. Der Tragkorb 20 weist auf seiner Umfangsfläche wiederum eine Vielzahl von Ausnehmungen 21 auf.

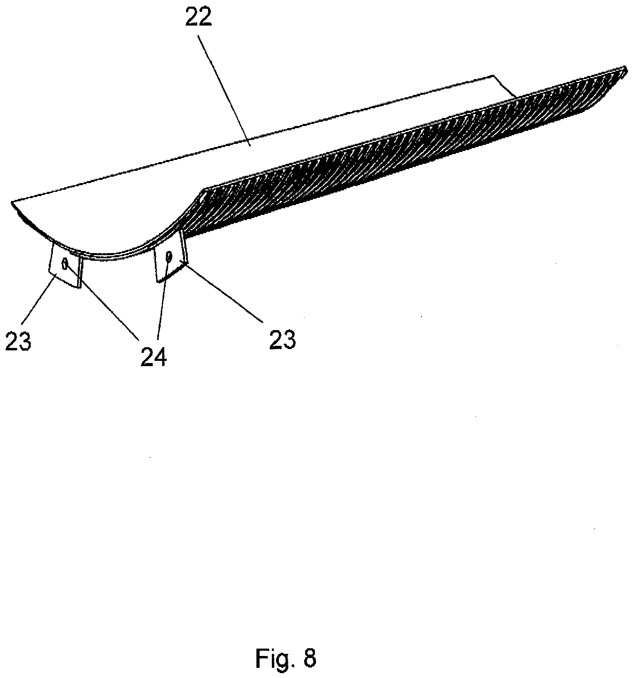

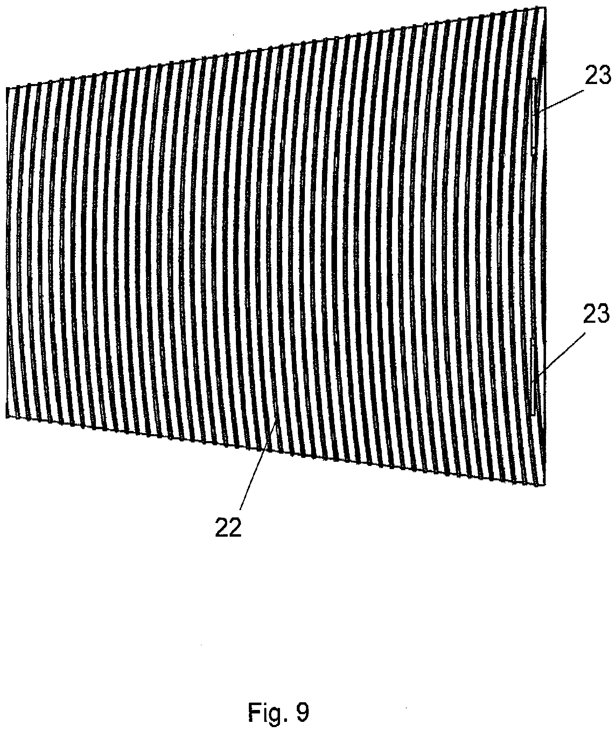

In den Figuren 8 und 9 ist jeweils ein einzelnes Siebsegment 22 der Ausführungsform gemäß Fig. 7 dargestellt. Fig. 8 zeigt eine perspektivische Ansicht eines solchen Siebsegmentes 22. Fig. 9 zeigt die Unteransicht eines Siebsegmentes 22 gemäß der zweiten Ausführungsform nach Fig. 7.

Die Siebsegmente 22 weisen jeweils zwei Befestigungslaschen 23 an der im montierten Zustand dem Tragkorb 20 zugewandten Seite auf. Die Befestigungslaschen 23 wiederum sind versehen mit Durchgangsbohrungen 24, welche im montierten Zustand durch Befestigungsschrauben 25 durchgriffen werden und mittels derer die Siebsegmente 22 an dem Tragkorb 20 an dessen Vorderseite angeschraubt werden. Im übrigen entspricht die Montage prinzipiell der ersten Ausführungsform, das heißt, dass die Siebsegmente 22 am kleineren Durchmesser des Tragkorbs 20 in eine umlaufende Nut in dem Tragkorb 20 formschlüssig eingelegt werden und am vorderen größeren Durchmesser des Tragkorbs 20 mittels der Befestigungsschrauben 25 an dem Tragkorb 20 angeschraubt werden.

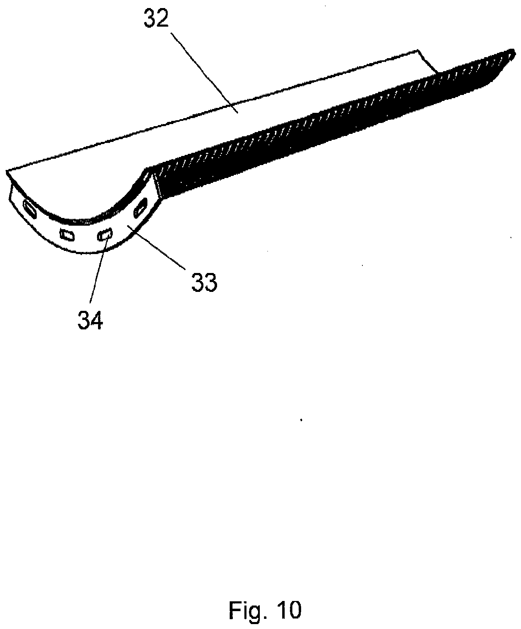

Fig. 10 zeigt eine perspektivische Ansicht einer dritten Ausführungsform eines Siebsegmentes 32. Dieses Siebsegment 32 weist wiederum eine angeschweißte Lasche 33 auf, die über den gesamten von dem Siebsegment 32 überdeckten Umfangsabschnitt verlaufen. Dabei weist diese Befestigungslasche 33 mehrere Langlöcher 34 auf, die von nicht dargestellten Befestigungsschrauben durchgriffen werden. Derartige Langlöcher 34 gestatten eine einfachere Fertigung der Siebsegmente 32 und vereinfachen ferner die Montage der Siebsegmente 32 an dem Tragkorb, da es aufgrund der Langlöcher 34 nicht erforderlich ist, eine exakte Ausrichtung des Siebsegmentes 32 gegenüber dem Tragkorb vorzunehmen.

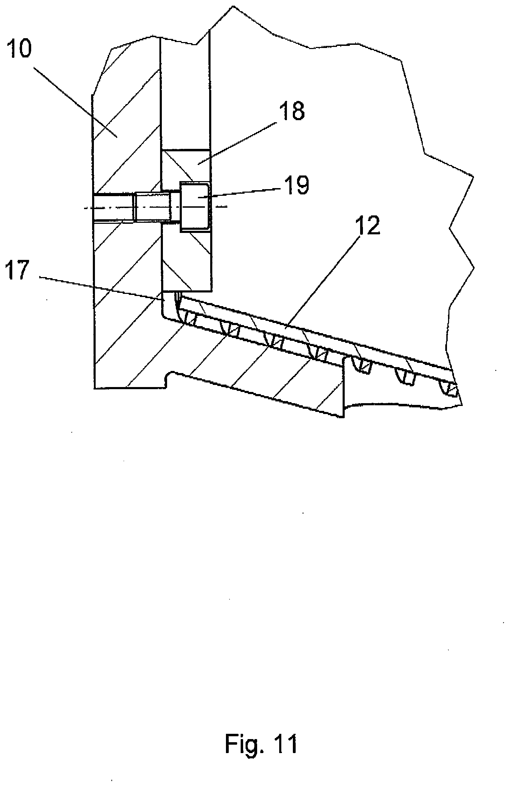

Fig. 11 zeigt eine Detaildarstellung einer alternativen Ausgestaltung der Einfädelnut 17 am hinteren Ende des Tragkorbs 10 mit einliegenden Siebsegmenten 12. Am kleineren Durchmesser des Tragkorbs 10 werden die Siebsegmente 12 formschlüssig in eine umlaufende Nut 17 in den Tragkorb 10 eingeschoben, wie dies in Fig. 11 erkennbar ist. Die Nut 17 läuft über den gesamten Umfang des Tragkorbs 10 an dessen hinteren Ende mit dem kleineren Durchmesser um. Die Siebsegmente 12 werden in die Nut 17 formschlüssig eingelegt und hierdurch am hinteren Ende des Tragkorbs 10 fixiert. Die Nut 17 ist bei dem Ausführungsbeispiel gemäß Figur 11 dadurch gebildet, dass Ringsegmente 18 mittels Befestigungsschrauben 19 am Tragkorb 10 angeschraubt sind, wodurch die umlaufende Nut 17 gebildet wird.

## Patentansprüche

1. Zentrifugenkorb für eine Siebzentrifuge, insbesondere eine Siebschnecken-, Schub- oder Schwingsiebzentrifuge, mit einem äußeren konischen Tragkorb (10, 20) und im Tragkorb (10, 20) einliegenden Siebsegmenten (12, 22, 32), wobei der Tragkorb (10, 20) an seinem hinteren Rand eine ringförmige Nut (17) aufweist, in die die Siebsegmente (12, 22, 32) formschlüssig eingelegt sind, **dadurch gekennzeichnet, dass** die Siebsegmente (12, 22, 32) an ihrer dem Tragkorb (10, 20) zugewandten Seite mindestens eine Lasche (13, 23, 33) aufweisen, die von zumindest einer Schraube (15, 25) durchgriffen ist und mittels derer die Siebsegmente (12, 22, 32) lösbar am vorderen Rand des Tragkorbs (10, 20) fixiert sind, wobei die Siebsegmente (12, 22, 32) an ihrem vorderen Rand über den Tragkorb (10, 20) hinausragen.

2. Zentrifugenkorb nach Anspruch 1, **dadurch gekennzeichnet, dass** die Siebsegmente (12, 22, 32) an den Seiten, mit denen zwei benachbarte Siebsegmente (12, 22, 32) angrenzen, frei von Verbindungen oder Befestigungen mit dem benachbarten Siebsegment (12, 22, 32) sind.

3. Zentrifugenkorb nach einem der vorherigen Ansprüche, **dadurch gekennzeichnet, dass** die Laschen (13, 23, 33) der Siebsegmente (12, 22, 32) Bohrungen (14, 24) und/oder Langlöcher (34) aufweisen, die von Befestigungsschrauben (15, 25) durchgriffen werden und mittels derer die Siebsegmente (12, 22, 32) lösbar an dem Tragkorb (10, 20) fixiert werden.

4. Zentrifugenkorb nach einem der vorherigen Ansprüche, **dadurch gekennzeichnet, dass** jedes Siebsegment (12, 22, 32) mehrere Laschen (24) an der dem Tragkorb (10, 20) zugewandten Seite aufweist und jedes Siebsegment (12, 22, 32) an mehreren Stellen über dem Umfangsschnitt des Segmentes mittels Befestigungsschrauben (15, 25) an dem Tragkorb (10, 20) fixiert wird.

5. Zentrifugenkorb nach einem der Ansprüche 1 bis 6, **dadurch gekennzeichnet, dass** jedes Siebsegment (12, 22, 32) eine über den gesamten Umfangsabschnitt des Segmentes laufende Lasche (13, 33) mit mehreren insbesondere äquidistant angeordneten Bohrungen (14) und/oder Langlöchern (34) aufweist und jedes Siebsegment (12, 22, 32) an mehreren Stellen über dem Umfangsabschnitt mittels Befestigungsschrauben (15, 25) an dem Tragkorb (10, 20) fixiert wird.

6. Zentrifugenkorb nach einem der vorherigen Ansprüche, **dadurch gekennzeichnet, dass** die Laschen (13, 23, 33) durch Flacheisen gebildet sind.

7. Zentrifugenkorb nach einem der vorherigen Ansprüche, **dadurch gekennzeichnet, dass** die Lasche/n (13, 23, 33) an dem Siebsegment (12, 22, 32) angeschweißt ist/sind.

8. Zentrifugenkorb nach einem der vorherigen Ansprüche, **dadurch gekennzeichnet, dass** das Sieb aus 4 bis 12, vorzugsweise 6 Siebsegmenten (12, 22, 32) gebildet ist.

9. Zentrifugenkorb nach einem der vorherigen Ansprüche, **dadurch gekennzeichnet, dass** es sich bei den Siebsegmenten (12, 22, 32) um Spaltsiebsegmente oder gefräste Siebsegmente oder lasergeschnittene Siebsegmente handelt.

10. Zentrifuge, insbesondere Siebschnecken-, Schub- oder Schwingsiebzentrifuge, **gekennzeichnet durch** einen Zentrifugenkorb nach einem der vorherigen Ansprüche.

## Claims

1. Centrifuge basket for a screen centrifuge, in particular a screen-worm, pusher or vibrating screen centrifuge, having an outer conical supporting basket (10, 20) and screen segments (12, 22, 32) inset in the supporting basket (10, 20), wherein the supporting basket (10, 20) has a circular groove (17) on its rear edge, into which the screen segments (12, 22, 32) are inset with positive locking, **characterised in that** the screen segments (12, 22, 32) have at least one flap (13, 23, 33) on their side facing the supporting basket (10, 20) which flap is penetrated by at least one screw (15, 25) and by means of which the screen segments (12, 22, 32) are fixed releasably to the front edge of the supporting basket (10, 20), wherein the screen segments (12, 22, 32) project beyond the supporting basket (10, 20) on their front edge.

2. Centrifuge basket according to claim 1, **characterised in that** the screen segments (12, 22, 32) on the sides joining two adjacent screen segments (12, 22, 32) have no connections or fastenings with the adjacent screen segment (12, 22, 32),

3. Centrifuge basket according to any of the preceding claims, **characterised in that** the flaps (13, 23, 33) of the screen segments (12, 22, 32) have drilled holes (14, 24) and/or slotted holes (34) through which fastening screws (15, 25) are inserted and by means of which the screen segments (12, 22, 32) are fixed releasably to the support basket (10, 20).

4. Centrifuge basket according to any of the preceding claims, **characterised in that** each screen segment (12, 22, 32) has multiple flaps (24) on the side facing the supporting basket (10, 20) and each screen segment (12, 22, 32) is fixed to the supporting basket (10, 20) at multiple points on the circumferential portion of the segment by means of fastening screws (15, 25).

5. Centrifuge basket according to any of claims 1 to 6, **characterised in that** each screen segment (12, 22, 32) has a flap (13, 33) running on the whole circumferential portion with multiple particularly equidistantly arranged drilled holes (14) and/or slotted holes (34) and each screen segment (12, 22, 32) is fixed to the supporting basket (10, 20) at multiple points on the circumferential portion of the segment by means of fastening screws (15, 25).

6. Centrifuge basket according to any of the preceding claims, **characterised in that** the flaps (13, 23, 33) are formed by flat iron bars.

7. Centrifuge basket according to any of the preceding claims, **characterised in that** the flap(s) (13, 23, 33) is/are welded to the screen segment (12, 22, 32)

8. Centrifuge basket according to any of the preceding claims, **characterised in that** the screen is formed from 4 to 12, preferably 6 screen segments (12, 22, 32).

9. Centrifuge basket according to any of the preceding claims, **characterised in that** the screen segments (12, 22, 32) are split screen segments or milled screen segments or laser-cut screen segments,

10. Centrifuge, in particular a screen-worm, pusher or vibrating screen centrifuge, **characterised by** a centrifuge basket according toany of the preceding claims.

## Revendications

1. Panier de centrifugeuse pour une centrifugeuse à tamis, en particulier une centrifugeuse à vis sans fin à tamis, à tamis à poussée ou à tamis à oscillation, avec un panier porteur (10, 20) conique extérieur et des segments de tamis (12, 22, 32) inclus dans le panier porteur (10, 20), dans lequel le panier porteur (10, 20) présente sur son bord arrière une rainure annulaire (17) dans laquelle les segments de tamis (12, 22, 32) sont introduits à complémentarité de formes, **caractérisé en ce que**
les segments de tamis (12, 22, 32) présentent sur leur côté tourné vers le panier porteur (10, 20) au moins une languette (13, 23, 33) qui est traversée par au moins une vis (15, 25) et au moyen de laquelle les segments de tamis (12, 22, 32) sont fixés de manière détachable sur le bord avant du panier porteur (10, 20), dans lequel les segments de tamis (12, 22, 32) dépassent sur leur bord avant du panier porteur (10, 20).

2. Panier de centrifugeuse selon la revendication 1, **caractérisé en ce que** les segments de tamis (12, 22, 32) sont exempts de liaisons ou fixations avec le segment de tamis contigu (12, 22, 32) sur les côtés avec lesquels deux segments de tamis (12, 22, 32) voisins sont contigus.

3. Panier de centrifugeuse selon l'une quelconque des revendications précédentes, **caractérisé en ce que** les languettes (13, 23, 33) des segments de tamis (12, 22, 32) présentent des perçages (14, 24) et/ou des trous oblongs (34) qui sont traversés par des vis de fixation (15, 25) et au moyen desquels les segments de tamis (12, 22, 32) sont fixés de manière détachable sur le panier porteur (10, 20),

4. Panier de centrifugeuse selon l'une quelconque des revendications précédentes, **caractérisé en ce que** chaque segment de tamis (12, 22, 32) présente plusieurs languettes (24) sur le côté tourné vers le panier porteur (10, 20) et chaque segment de tamis (12, 22, 32) est fixé sur plusieurs endroits sur la section périphérique du segment au moyen de vis de fixation (15, 25) sur le panier porteur (10, 20).

5. Panier de centrifugeuse selon l'une quelconque des revendications 1 à 6, **caractérisé en ce que** chaque segment de tamis (12, 22, 32) présente une languette (13, 33) tournant sur la section périphérique entière du segment avec plusieurs perçages (14) et/ou trous oblongs (34) agencés en particulier de manière équidistante et chaque segment de tamis (12, 22, 32) est fixé sur plusieurs endroits sur la section périphérique au moyen de vis de fixation (15, 25) sur le panier porteur (10, 20).

6. Panier de centrifugeuse selon l'une quelconque des revendications précédentes, **caractérisé en ce que** les languettes (13, 23, 33) sont formées par des fers plats.

7. Panier de centrifugeuse selon l'une quelconque des revendications précédentes, **caractérisé en ce que** la/les languette(s) (13, 23, 33) est/sont soudée(s) sur le segment de tamis (12, 22, 32).

8. Panier de centrifugeuse selon l'une quelconque des revendications précédentes, **caractérisé en ce que** le tamis est formé de 4 à 12, de préférence 6 segments de tamis (12, 22, 32).

9. Panier de centrifugeuse selon l'une quelconque des revendications précédentes, **caractérisé en ce qu'**il s'agit pour les segments de tamis (12, 22, 32) de segments de tamis à fente ou segments de tamis fraisés ou segments de tamis coupés au laser.

10. Centrifugeuse, en particulier centrifugeuse à vis sans fin à tamis, à tamis à poussée ou à tamis à oscillation, **caractérisée par** un panier de centrifugeuse selon l'une quelconque des revendications précédentes.
